# EUROPÄISCHE PATENTSCHRIFT

(11) **EP 3 710 222 B1**
(45) Veröffentlichungstag und Bekanntmachung des Hinweises auf die Patenterteilung: **28.07.2021**
(21) Anmeldenummer: 19783488.0
(22) Anmeldetag: 02.10.2019
(51) Int. Cl.: B29C 45/67, B29C 45/68

(54) **FORMSCHLIESSEINHEIT FÜR EINE SPRITZGIESSMASCHINE SOWIE VERFAHREN ZUM VERRIEGELN EINES KRAFTÜBERTRAGUNGSELEMENTS**
MOLD-CLOSING UNIT FOR AN INJECTION MOLDING MACHINE, AND METHOD FOR LOCKING A FORCE TRANSMISSION ELEMENT
UNITÉ DE FERMETURE DE MOULE DESTINÉE À UNE MACHINE DE MOULAGE PAR INJECTION AINSI QUE PROCÉDÉ DE BLOCAGE D'UN ÉLÉMENT DE TRANSMISSION DE FORCE

(30) Priorität: 05.10.2018 DE 102018124608
(43) Veröffentlichungstag der Anmeldung: 23.09.2020
(73) Patentinhaber: Arburg GmbH + Co KG, 72290 Loßburg (DE)
(72) Erfinder: BLETSCHER, Rainer, 72270 Baiersbronn (DE)
(74) Vertreter: RPK Patentanwälte Reinhardt, Pohlmann und Kaufmann Partnerschaft mbB
(86) Internationale Anmeldenummer: PCT/EP2019/076748
(87) Internationale Veröffentlichungsnummer: WO 2020/070210

(56) Entgegenhaltungen:
- EP-A1- 1 369 218
- WO-A1-2019/129670
- DE-A1- 1 529 931
- DE-A1- 1 930 163
- DE-A1- 2 812 301
- DE-A1- 3 042 712
- DE-A1- 3 440 476
- DE-A1- 4 032 106
- DE-A1-102015 101 570
- US-B1- 6 261 505

## Beschreibung

Die Erfindung betrifft eine Formschließeinheit für eine Spritzgießmaschine zur Verarbeitung plastifizierbarer Massen wie Kunststoffe, pulverförmige oder keramische Massen nach dem Oberbegriff des Anspruches 1 sowie ein Verfahren zum Verriegeln eines Kraftübertragungselements an einer Spritzgießmaschine nach dem Oberbegriff des Anspruches 10.

Im Rahmen dieser Anmeldung werden folgende Begriffe wie folgt gebraucht:
- Unter "Formschluss" einer Spritzgießform wird der Zustand verstanden, in dem die auf Formträgern der Spritzgießmaschine befestigten Teile einer Spritzgießform aneinander liegen. Dies ist regelmäßig dann der Fall, wenn plastifiziertes Material in den Formhohlraum der Spritzgießform eingespritzt wird. Eine Fahrbewegung in und außer Formschluss ist damit eine Bewegung, die einem Öffnen und Schließen der Spritzgießform entspricht.
- Unter "Formhöhe" wird die Höhe der Form verstanden, die in Schließrichtung gemessen wird und dem Abstand zwischen beweglichem Formträger und stationärem Formträger bei geschlossener Spritzgießform entspricht.
- Unter einer "Formhöhenverstelleinrichtung" wird ein Mechanismus verstanden, der erforderlich ist, um eine optimale Stellung von beweglichem und stationärem Formträger bei geschlossener Spritzgießform zu erreichen. Ausgehend von dieser Stellung erfolgen die Schließbewegung und der Aufbau der Schließkraft, so dass beim Schließen der Spritzgießform die maximale Schließkraft aufgebracht werden kann. Derartige Formhöhenverstelleinrichtungen sind auch erforderlich, wenn Schließwege optimiert werden, wenn z.B. auf ein und derselben Maschine Spritzgießformen mit unterschiedlicher Formhöhe eingesetzt werden.

Aus der dem Oberbegriff der unabhängigen Ansprüche zu Grunde liegenden DE 15 54 765 ist eine Formschließeinheit mit einer Steuerung für die Bewegungseinrichtung eines beweglichen Formenhalters bekannt, der mit einem feststehenden Formenhalter verriegelt wird. Dazu ist ein quer zur Schließrichtung betätigbares Verriegelungselement gelenkig mit einer Schließeinrichtung verbunden ist, die durch eine Kolben-Zylinder-Einheit gebildet ist. Bei Betätigung der Schließeinrichtung erfolgt eine axiale Bewegung des Verriegelungselements in Schließrichtung, wobei das Verriegelungselement mit seiner Verzahnung über einen Entriegelungsfortsatz quer zur Schließrichtung in Eingriff mit einer gegengleichen Verzahnung gebracht wird.

Aus der US 6,261,505 B1 ist ein Mechanismus zur Aufbringung einer Klemmkraft auf den Holm einer Formschließeinheit an einer Spritzgießmaschine bekannt. Ein in Schließrichtung beweglicher Aktor in Form eines "sliding piston" sorgt bei Bewegung des Aktors dafür, dass Verriegelungselemente in Form eines "locking ring" quer zur Schließrichtung entlang einer Zwangsführung geführt werden.

Aus der US 9,469,063 B2 ist eine Formschließeinrichtung bekannt, bei der ein stationärer Formträger und ein beweglicher Formträger über Holme miteinander verbunden sind. Die Formträger spannen zwischen sich einen Formspannraum zur Aufnahme von Spritzgießformen auf. Auf der Seite des beweglichen Formträgers sind Kolben von Schließzylindern vorgesehen, die mit Betätigungsabschnitten der Holme bedarfsweise in Eingriff stehen. Zur Verriegelung von Holm und beweglichem Formträger werden dazu Halbmuttern in Wirkeingriff mit dem betätigbaren Abschnitt gesteuert, so dass anschließend durch eine andere Einheit die Schließkraft aufgebracht werden kann.

Aus der EP 0 904 918 B1 ist eine derartige Verriegelung mit einem Bajonettverschluss bekannt. Der Holm besitzt hierzu Bereiche, in die ein Schließkolben eingreifen kann, sowie Bereiche, entlang derer der radial auf dem Führungsholm bewegliche Schließkolben gleiten kann. Durch eine Drehung des Schließkolbens wird ein formschlüssiger Eingriff bewirkt, so dass an diesem Kolben zugleich zumindest ein Teil der Schließkraft ebenfalls aufgebracht werden kann. Die Schließkraft wird mittels Hydraulikdruck gegen die Oberfläche des Kolbens aufgebracht. Die Klemmanordnung greift somit in die Führungsholme ein und übt gleichzeitig einen Druck auf die Formhälften während des Spritzgießens aus.

Aus der EP 1 068 060 B1 ist eine Formschließeinheit bekannt, bei der im Bewegungsbereich der Formschließeinheit ein Abschnitt vorgesehen ist, in dem bei Überführung des Formträgers in diesen Bereich eine Entkopplung der Abstützplatte erfolgt, so dass die Abstützplatte selbst durch den Antrieb verstellt werden kann, um eine Formhöhenverstellung zu bewirken. Voraussetzung für eine derartige Lösung ist allerdings die Verwendung bzw. der Aufbau einer Drei-Platten-Maschine mit Abstützplatte, beweglichem Formträgen und stationärem Formträger.

In der DE 103 18 405 A1 ist eine Spritzgießeinrichtung mit einer Verriegelungsvorrichtung offenbart, welche gegeneinander verschiebbare Backen aufweist. Beim Schließen der Formaufspannplatten sind die Backen geöffnet, sodass die Holme eingeführt werden können. In der Schließposition greifen die Backen in entsprechende Stege eines Verriegelungsteils der Holme ein. Anschließend wird mit einem Druckkissen der notwendige Schließdruck z.B. mit einer hydraulischen Kolbenzylinderanordnung aufgebracht. Die Backen sind dabei zumindest teilweise federnd ausgebildet, sodass die Federbelastung eine Kraft in Richtung der Verriegelungsstellung der Backen ausübt.

Ein Schließ- und Klemmsystem mit im beweglichen Formträger integrierten Klemmmitteln ist in der EP 1 369 218 B1 offenbart. Die Klemmmittel wirken auf einen Abschnitt der Führungssäulen und verriegeln so die bewegliche Platte in einer Schließposition. Ferner weisen die Klemmmittel eine Mehrzahl von Verriegelungseinsätzen auf, welche verschiebbar in Aufnahmen eines in die bewegliche Platte integrierten Körpers montiert und von einer nicht verklemmten Position in eine Klemmposition überführbar sind. Die Verriegelungssätze weisen weiterhin ein Loch zur Aufnahme einer exzentrischen Welle auf, welche bei einer Drehung ein Öffnen und Schließen der Klemmmittel ermöglicht. Um ein Festklemmen der Klemmmittel zu ermöglichen, sind die Aufnahmen mittels Kolben ausgebildet, welche zusammen mit einem in der beweglichen Platte integrierten Zylinder mit Druck beaufschlagt werden können.

Die EP 1 354 689 A1 zeigt eine hydraulische Klemmvorrichtung für eine Spritzgießmaschine mit Formhöheneinstellung und Holmspannmitteln, welche eine Spannhülse und einen Hydraulikzylinder aufweisen. Die Spannhülse und der Hydraulikzylinder, welcher Innenverzahnungen in axial beabstandeten Positionen für entsprechende Holmeinkerbungen aufweist, sind axial verstellbar sowie rotierbar. So lässt sich die Klemmposition wie bei einem Bajonettverschluss je nach Formhöhe einstellen.

Ausgehend von diesem Stand der Technik liegt der vorliegenden Erfindung die Aufgabe zugrunde, eine Formschließeinheit und ein Verfahren zur Verriegelung von Kraftübertragungselementen an einer Spritzgießmaschine zu schaffen, bei der auch zur Aufbringung hoher Kräfte sowohl der Verriegelungsmechanismus zum Verriegeln der Holme mit dem Formträger als auch die Einheit zum Aufbringen der Schließkraft in eine gemeinsame Einheit zuverlässig integriert sind.

Diese Aufgabe wird durch eine Formschließeinheit mit den Merkmalen des Anspruches 1 sowie durch ein Verfahren zum Verriegeln eines Kraftübertragungselements mit den Merkmalen des Anspruches 10 gelöst. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Die Formschließeinheit weist einen stationären Formträger und einen relativ dazu beweglichen Formträger auf, die zwischen sich einen Formspannraum zur Aufnahme von Spritzgießformen bilden. Der bewegliche Formträger ist entlang einer Schließrichtung zum Schließen und Öffnen der Spritzgießform beweglich. Mittels einer Formfahreinrichtung kann der bewegliche Formträger in und außer Formschluss der Spritzgießform überführt werden. Mittels wenigstens eines Kraftübertragungselements sind die Formträger miteinander verbindbar, wobei das Kraftübertragungselement mit einem der Formträger verbunden ist. Das Kraftübertragungselement weist an seinem dem anderen Formträger zugeordneten Bereich ein für einen Wirkeingriff betätigbaren Abschnitt auf. An diesem anderen Formträger ist eine Verriegelungseinrichtung mit mehreren radial zum Kraftübertragungselement angeordneten Verriegelungselementen vorgesehen, die beim Formschluss der Teile der Spritzgießform zum Aufbringen einer Schließkraft mit dem betätigbaren Abschnitt in formschlüssige Wirkverbindung überführbar sind. Die Verriegelungseinrichtung weist dazu wenigstens einen in Schließrichtung beweglichen Aktor auf, an dem bei Bewegung des Aktors die Verriegelungselemente quer zur Schließrichtung entlang einer Zwangsführung beim Formschluss in und außer formschlüssiger Wirkverbindung mit dem betätigbaren Abschnitt überführbar sind. Gleichzeitig ist der Aktor mit wenigstens einem Kolben einer Kolben-Zylinder-Einheit zum Aufbringen der Schließkraft verbunden. Dadurch kann einerseits eine kompakte Baueinheit gebildet werden, die platzsparend an einem der Formträger angebracht werden kann. Gleichzeitig ist durch die Zwangsführung auch gewährleistet, dass selbst hohe Kräfte zuverlässig auch über viele Zyklen der Spritzgießmaschine hinweg aufgebracht werden können.

Durch eine vollständige Lösbarkeit der vorzugsweise als Holme ausgebildeten Kraftübertragungselemente werden die baulichen Voraussetzungen dafür geschaffen, den Formspannraum, in dem Spritzgießformen beim Spritzgießen von Spritzlingen zwischen den Formträgern aufgenommen werden, vollständig von den Holmen frei zu fahren, was eine bessere Zugänglichkeit des Formspannraums und damit der Spritzgießform gestattet. Dennoch kann eine gleichbleibende Kraftaufbringung und damit eine gleichbleibend gute Qualität der Spritzgießteile erreicht werden.

Die Zwangsführung ist eine Kulissenführung für die Verriegelungselemente. Die Verriegelungselemente sind mit dem betätigbaren Abschnitt des Kraftübertragungselements in Wirkverbindung überführbare Spannbacken. Die Kulissenführung trägt zu einer leichtgängigen Ausübung der Verriegelungsbewegung bei, die auch bei hohen Kräften zuverlässig arbeitet. Die Kulissenführung gestattet zudem eine hohe Präzision und damit auch wiederholbare Vorherbestimmbarkeit der Verriegelung.

Eine derartige Lösung kann sowohl an einer 3-Platten-Maschine als auch an einer 2-Platten-Maschine eingesetzt werden, bei der die Einheit zur Aufbringung der Schließkraft unmittelbar an einem der Formträger angreift, so dass auf ein weiteres zusätzlich erforderliches Abstützelement verzichtet werden kann.

Vorzugsweise führt die lineare Bewegung des Aktors in Schließrichtung zu einer quer zur Schließrichtung und radial zur Längserstreckung des Kraftübertragungselements erfolgenden Bewegung der Verriegelungselemente. Dadurch kann auf einfache Weise von der Aktorbewegung die Verriegelungsbewegung abgeleitet werden, ohne dass der Aktor sich radial in Verriegelungsrichtung verformt. Aufgrund der Zwangsführung der Verriegelungselemente am Aktor ist dennoch ein formschlüssiger Kraftschluss im verriegelten Zustand gewährleistet.

Günstigerweise ist die Kulissenführung für Rollen bestimmt, an denen die Verriegelungselemente gelagert sind. Auch die Rollen tragen zu einer leichtgängigen Ausübung der Verriegelungsbewegung bei, was die erwünschte hohe Präzision und damit auch wiederholbare Vorherbestimmbarkeit der Verriegelung steigert.

Vorteilhafterweise können die das Kraftübertragungselement im mit dem Formträger verriegelten Zustand übergreifenden Elemente des Aktors außenseitig die Kulissenführung für die Verriegelungselemente bzw. alternativ eine Rollbahn für Rollen für die Verriegelungselemente bilden, an welchen Rollen die Verriegelungselemente gegenüber der Rollbahn geführt sind. Die mehrfache Verwendbarkeit der Elemente des Aktors gewährleistet zum einen eine zuverlässige Führung der Verriegelungselemente, zum anderen gestattet dies einen platzsparenden Aufbau der gesamten Verriegelungseinheit.

Vorzugsweise sind die Verriegelungselemente platzsparend in sich in Schließrichtung erstreckenden Ausnehmungen des Aktors angeordnet, was zu einem kompakten Aufbau beiträgt und gleichzeitig auf engstem Raum die Übertragung hoher Kräfte gewährleistet. Um die Zuverlässigkeit der Führung der Verriegelungselemente weiter zu erhöhen, können die Verriegelungselemente an Rollen in einem Bewegungskanal beidseitig zwangsgeführt werden, um die Präzision weiter zu steigern. Dadurch ergibt sich eine leichtgängige Betätigung und damit eine erhöhte Prozesssicherheit.

Vorteilhafterweise sind die Verriegelungselemente gegen die Kraft elastischer Mittel in ihre entriegelte Stellung überführbar. Dies bedeutet, dass die Verriegelungselemente ohne äußere Kraft sich in die Verriegelungsstellung bewegen wollen, was zu einer zusätzlichen Betriebssicherheit beiträgt.

Alternativ ist es von Vorteil, die Verriegelungselemente an Doppelrollen geführt parallel zur Schließrichtung in und außer Wirkverbindung mit dem betätigbaren Abschnitt zu überführen. Die Parallelbewegung an Doppelrollen führt zu einem parallelen Einfahren der Verriegelungselemente in die entsprechenden gegengleichen Verriegelungselemente des betätigbaren Abschnittes und zu einer Minimierung der Kippbewegung der Verriegelungselemente, was verschleißmindernd ist und damit die Lebensdauer erhöht bzw. die Wartungsbedürftigkeit verringert.

Vorteilhafterweise sind die Aktoren und Kolben Teile einer in sich geschlossenen Baugruppe, die insofern auch als Baugruppe der Maschine zugeführt werden kann. Dies hat Vorteile nicht nur bei der Herstellung der Spritzgießmaschine im Werk des Herstellers, sondern auch dann, wenn Spritzgießmaschinen an entfernten Plätzen dieser Erde schnell und zuverlässig gewartet werden müssen, da es dann möglich ist, eine derartige Baugruppe entweder dort gut vorzuhalten oder schnell dorthin zu liefern. Am Einsatzort ist dann nur noch ein Austausch der Baugruppe gegen die bisherige Baugruppe vorzunehmen. Damit sind vorzugsweise der Aktor zur Verrieglung des wenigstens einen Kraftübertragungselements mit dem Formträger und der Kolben zum Aufbringen der Schließkraft Teile einer in sich geschlossenen Baugruppe.

Bei einer vorteilhaften Ausgestaltung kann im verriegelten Zustand mittels eines Kolbens einer Kolben-Zylinder-Einheit ein Hochdruck zur Erzeugung der Schließkraft oder zum verstärkten Öffnen der Spritzgießform aufgebracht werden und/oder der Kolben ist zum Aufbringen der Schließkraft gegen die Kraft elastischer Elemente betätigbar. Damit erfolgt das Verriegeln zwischen Formträger und Kraftübertragungselement mittels des Aktors als auch die Schließkraftaufbringung mit ein und derselben Baugruppe. Gleichzeitig kann durch die Federdämpfung eine Überlastsicherung beim Einfahren des Holms in den Aktor erreicht werden, was z.B. in Folge unsachgemäß eingestellter Formhöhe auftreten kann. Damit wird gleichzeitig die gesamte Spritzgießmaschine betriebssicher gestaltet. Die Federelemente können zusätzlich der automatischen Rückstellung in die Grundposition nach der Wegnahme der Schließkraft dienen.

Die erfindungsgemäß gestellte Aufgabe wird auch durch ein Verfahren zum Verriegeln eines Kraftübertragungselements an einem der Formträger der Spritzgießmaschine gelöst. Für dieses Verfahren weist die Spritzgießmaschine die baulichen Elemente umfassend einen stationären Formträger, einen beweglichen Formträger, eine Formfahreinrichtung sowie wenigstens ein Kraftübertragungselement auf, wobei ein betätigbarer Abschnitt eines Kraftübertragungselements beim Formschluss der Teile der Spritzgießform an dem anderen Formträger formschlüssig mittels mehrerer radialer zum Kraftübertragungselement angeordneter Verriegelungselemente wenigstens einer Verriegelungseinrichtung verriegelt wird. Im so verriegelten Zustand wird eine über das Kraftübertragungselement wirkende Schließkraft aufgebracht. Dadurch, dass die Verriegelungselemente an wenigstens einem in Schließrichtung beweglichen Aktor quer zur Schließrichtung entlang einer Zwangsführung beim Formschluss in und außer formschlüssige Wirkverbindung mit dem betätigbaren Abschnitt überführbar sind und dass der Aktor innerhalb der Verriegelungseinrichtung zugleich mit einem Kolben einer Kolbenzylindereinheit verbunden ist, der die Schließkraft aufbringt, wird nicht nur eine kompakte bauliche Lösung geschaffen. Die Verriegelungselemente werden bei der Bewegung des Aktors in Schließrichtung in einer als Zwangsführung ausgebildeten Kulissenführung geführt, die als Spannbacken mit dem betätigbaren Abschnitt in Wirkverbindung überführbar sind. Die Zwangsführung gestattet nachhaltig wiederholbar und zuverlässig die Überführung der Verriegelungselemente in die Verriegelungsstellung, so dass auch nach vielen Zyklen noch eine hohe Präzision gewährleistet werden kann. Die Kulissenführung trägt ergänzend zu einer leichtgängigen Ausübung der Verriegelungsbewegung bei, die auch bei hohen Kräften zuverlässig arbeitet. Die Kulissenführung gestattet zudem eine hohe Präzision und damit auch wiederholbare Vorherbestimmbarkeit der Verriegelung. Dadurch wird gleichzeitig erreicht, dass sich keine Positionierungsfehler einstellen, was damit zur Betriebssicherheit als auch zur Steigerung der Präzision der zu fertigenden Teile beiträgt.

Günstigerweise führt die lineare Bewegung des Aktors und der Kulissenführung axial in Schließrichtung zu der quer zur Schließrichtung und radial zur Längserstreckung des Kraftübertragungselements erfolgenden Bewegung der Verriegelungselemente. Dies trägt dazu bei, dass zuverlässig die Verriegelung bewerkstelligt werden kann, ohne dass es einer hierzu erforderlichen Verformung des Aktors bedarf.

Vorzugsweise sind die Verriegelungselemente an Rollen gelagert in der Kulissenführung am Aktor zwangsgeführt. Ergänzend oder alternativ können bei einer vorteilhaften Ausgestaltung auch die Verriegelungselemente an Rollen in einem Bewegungskanal der Zwangsführung beidseitig geführt werden. Beides trägt je für sich zur Steigerung der Präzision bei, da damit vorherbestimmbar der Bewegungsablauf der Verriegelungselemente vorgegeben ist. Dies führt zu einer exakten Verriegelung und damit auch selbst bei hohen Kräften zu einer zuverlässigen Kraftübertragung und zu einer Erhöhung der Prozesssicherheit. Die Führungsbahn für die Rollen ist vorzugsweise so ausgeführt, dass die Rollen des Verriegelungselements im verriegelten Zustand auf einer Ebene stehen und nicht ohne eine weitere äußere Kraft verschoben werden können.

Die Verriegelungselemente werden günstigerweise gegen die Kraft elastischer Mittel in ihre entriegelte Stellung überführt. Dies bedeutet, dass die Verriegelungselemente ohne äußere Krafteinwirkung sich in ihre verriegelte Stellung bewegen wollen, so dass eine erhöhte Betriebssicherheit gewährleistet ist, selbst wenn es zu Störungen der Energieversorgung beim Betrieb der Spritzgießmaschine kommen sollte.

Es ist von Vorteil, wenn die Verriegelungselemente an Doppelrollen parallel zur Schließrichtung in und außer Wirkverbindung mit dem betätigbaren Abschnitt überführt werden. Dies bedeutet, dass die Verriegelungselemente eine Parallelverschiebung in und außer Eingriff mit dem betätigbaren Abschnitt des Kraftübertragungselements vornehmen. Dadurch wird ein exaktes Einfahren der Verriegelungen ineinander gewährleistet, was gerade bei einer formschlüssigen Verbindung von Vorteil ist und die Lebensdauer der miteinander zu verriegelnden Teile erhöht.

Vorzugsweise wird im verriegelten Zustand mittels des Kolbens ein Hochdruck zur Erzeugung der Schließkraft erzeugt und/oder der Kolben zum Aufbringen der Schließkraft gegen die Kraft elastischer Elemente betätigt. Dies trägt zum einen dazu bei, dass bei einem Verkleben der Spritzgießform bedarfsweise ein zusätzlicher Hochdruck zum Öffnen aufgebracht werden kann, andererseits ist die durch die elastischen Mittel mögliche Dämpfung insbesondere dann von Vorteil, wenn unsachgemäße Eingaben zu einer Fehlbedienung führen. In diesem Fall wird die Maschine zusätzlich entlastet bzw. geschützt.

Weitere Vorteile ergeben sich aus den Unteransprüchen und der nachfolgenden Beschreibung eines bevorzugten Ausführungsbeispiels.

Im Folgenden wird die Erfindung an mehreren in den beigefügten Figuren dargestellten Ausführungsbeispielen näher erläutert. Es zeigen:
- Fig. 1: eine dreidimensionale Darstellung einer Formschließeinheit einer 2-Platten-Maschine in einem ersten Ausführungsbeispiel,
- Fig. 2: eine dreidimensionale Darstellung der Formschließeinheit gemäß Fig. 1 mit Blick auf die Formhöhenverstellung am beweglichen Formträger,
- Fig. 3: eine dreidimensionale Darstellung des stationären Formträgers mit Ansicht auf die Aufnahmeöffnung zur Aufnahme der Kraftübertragungselemente,
- Fig. 4: eine vergrößerte Ansicht auf die Verriegelungseinrichtung am stationären Formträger,
- Fig. 5: ein Schnitt nach Linie V-V von Fig. 4 im geschlossenen, verriegelten Zustand der Verriegelungseinrichtung,
- Fig. 6: ein Schnitt nach Linie VI-VI von Fig. 5,
- Fig. 7: eine Darstellung gemäß Fig. 5 im offenen, unverriegelten Zustand der Verriegelungseinrichtung,
- Fig. 8: ein Schnitt nach Linie VIII-VIII von Fig. 7,
- Fig. 9: einen Schnitt durch eine Verriegelungseinrichtung in einer Darstellung gemäß Fig. 5 in einer alternativen Ausführungsform mit einer Verbindungsplatte,
- Fig. 10: eine Ansicht auf eine Verriegelungseinrichtung gemäß Fig. 3 in einem weiteren Ausführungsbeispiel,
- Fig. 11: einen Längsschnitt durch die Verriegelungseinrichtung gemäß Fig. 10 in einer Darstellung gemäß Fig. 5 im geschlossenen, verriegelten Zustand der Verriegelungseinrichtung,
- Fig. 12: eine Darstellung gemäß Fig. 11 in einer offenen, unverriegelten Stellung der Verriegelungseinrichtung.

### Ausführliche Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

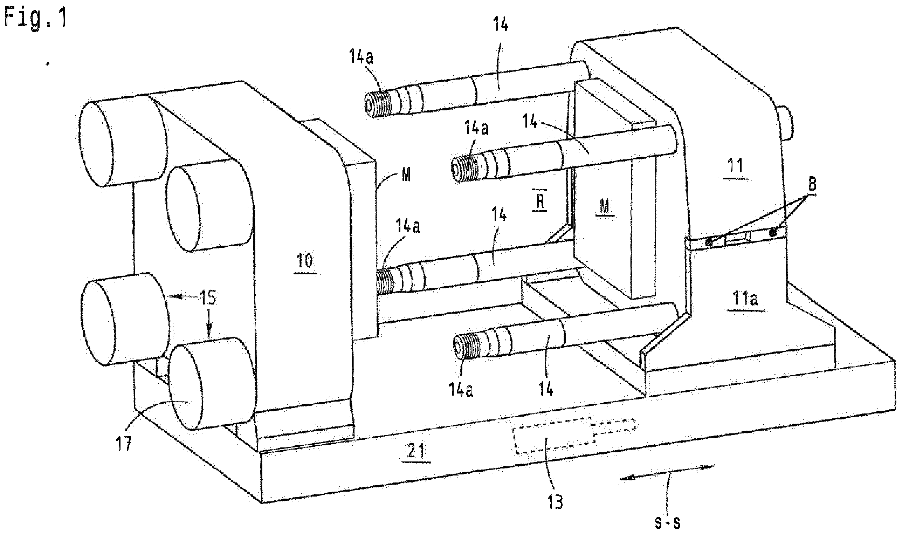

Die Figuren zeigen eine Formschließeinheit für eine Spritzgießmaschine zur Verarbeitung von Kunststoffen und anderen plastifizierbaren Massen. Figur 1 zeigt eine schematische Darstellung einer derartigen Formschließeinheit an einer 2-Platten-Maschine, bei der am stationären Formträger 10 eine Verriegelungseinrichtung 15 und eine Kolben-Zylinder-Einheit 17 zum Aufbringen der Schließkraft angeordnet sind. Eine derartige Lösung kann aber auch an einer 3-Platten-Maschine eingesetzt werden, die ein Abstützelement zur Abstützung einer Einheit zur Aufbringung der Schließkraft aufweist.

Auf einem Maschinenständer 21 ist der bewegliche Formträger 11 in Schließrichtung s-s bewegbar angeordnet, wobei die Bewegung z.B. über eine im Maschinenständer 21 angeordnete, nur schematisch angedeutete Formfahreinrichtung 13, wie z.B. einen Zahnstangenantrieb, einen hydraulischen Antrieb, einen Spindelantrieb oder auf andere geeignete Weise erfolgen kann. Der bewegliche Formträger 11 ist über einen Tischschlitten 11a auf dem Maschinenständer 21 abgestützt und am Tischschlitten 11a über Befestigungsmittel B befestigt. Dadurch ergibt sich eine drehmomentoptimierte Krafteinleitung aufgrund der vertikal etwa mittigen Lagerung des beweglichen Formträgers.

Stationärer Formträger 10 und beweglicher Formträger 11 spannen zwischen sich einen Formspannraum R zur Aufnahme von Spritzgießformen M auf, die eine unterschiedliche Formhöhe aufweisen können. Die Teile der Spritzgießform M werden durch die Formfahreinrichtung 13 entlang der Schließrichtung s-s geschlossen und geöffnet, um dadurch zyklusweise Spritzlinge in einem zeichnerisch nicht dargestellten Formhohlraum der Spritzgießform herzustellen und auszuwerfen. Die Formfahreinrichtung 13 dient zur Überführung des beweglichen Formträgers 11 in und außer Formschluss der zwischen den Formträgern aufgenommenen Teile der Spritzgießform M.

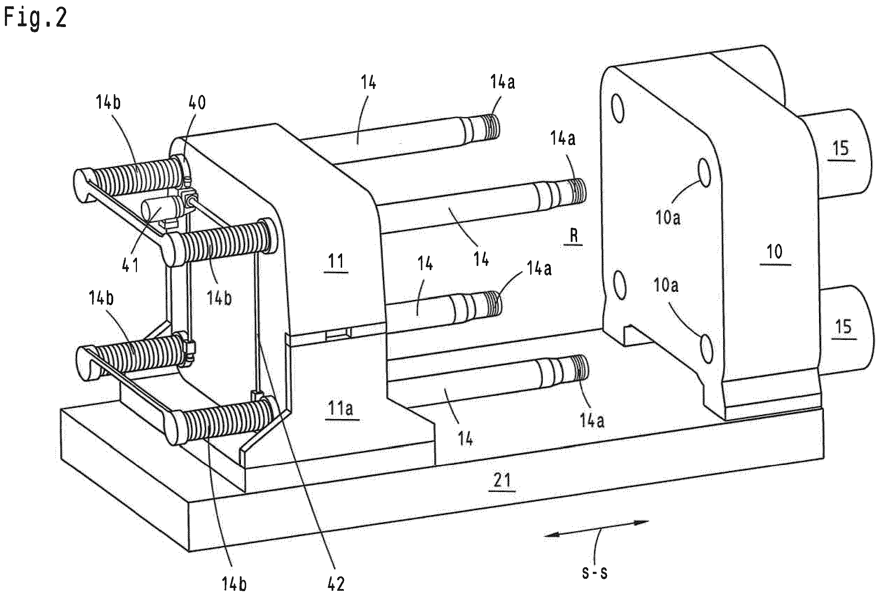

Fig. 2 zeigt auf der vom Formspannraum R abgewandten Seite des beweglichen Formträgers 11 die Formhöhenverstelleinrichtung 42, die dazu bestimmt und geeignet ist, die Schließwege zu optimieren und/oder eine optimale Stellung der Formträger beim Formschluss zu gewährleisten. Erkennbar ist, dass als Kraftübertragungselemente ausgebildete Holme 14 in diesem Bereich einen Gewindeabschnitt 14b aufweisen, der mit Muttern 40 in Wirkverbindung steht. Die Muttern werden über einen Motor 41 und entsprechende Getriebeeinheiten gestellt, wobei sich eine Relativbewegung zwischen den Kraftübertragungselementen und dem beweglichen Formträger 11 in Schließrichtung s-s ergibt.

Gemäß Fig. 1 und 2 wird das wenigstens eine Kraftübertragungselement im Ausführungsbeispiel durch mehrere gemeinsame mit dem beweglichen Formträger 11 bewegliche Holme 14 gebildet, die bei geöffneter Spritzgießform den Formspannraum R freigeben. Um den Formschluss zu bewerkstelligen, tauchen die Holme 14 mit ihrem betätigbaren Abschnitt 14a in Aufnahmeöffnungen 10a des stationären Formträger ein, damit dort in noch zu beschreibender Weise die formschlüssige Verbindung zwischen Formträger und Kraftübertragungselement hergestellt werden kann.

Das wenigstens eine Kraftübertragungselement, im Ausführungsbeispiel die mehreren Holme 14, sind mit einem der Formträger 11, 10, im Ausführungsbeispiel mit dem beweglichen Formträger 11 verbunden. An dem von dem einen der Formträger beabstandeten Ende weisen die Kraftübertragungselemente einen für einen Wirkeingriff mit dem anderen Formträger 10, 11 - hier dem stationären Formträger 10 - vorgesehenen und insofern betätigbaren Abschnitt 14a auf. Am anderen Formträger, d.h. im Ausführungsbeispiel am stationären Formträger 10, ist eine Verriegelungseinrichtung 15 vorgesehen, die beim Formschluss der Teile der Spritzgießform M zum Aufbringen einer Schließkraft mit dem betätigbaren Abschnitt 14a des wenigstens einen Kraftübertragungselements in formschlüssige Wirkverbindung überführbar ist.

Die in den Figuren 1 und 2 dargestellte Formschließeinheit stellt nur einen Teil der Spritzgießmaschine dar, denn üblicherweise ist eine zeichnerisch nicht dargestellte Spritzgießeinheit vorgesehen, über die das zu plastifizierende Material plastifiziert und in den Formhohlraum der Spritzgießform eingespritzt wird. Der entsprechende Aufbau einer Spritzgießmaschine, bestehend aus den Teilen Formschließeinheit und Spritzgießeinheit, ist dem Fachmann jedoch bekannt, so dass hierauf in dieser Anmeldung nicht näher eingegangen wird.

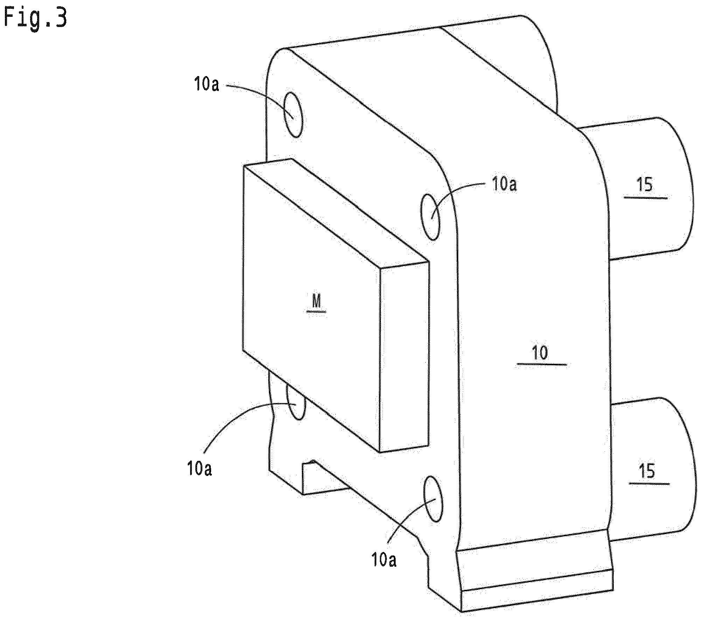

Figur 3 zeigt den stationären Formträger 10 mit den Verriegelungseinrichtungen 15, wobei je Kraftübertragungselement bzw. Holm 14 eine Verriegelungseinrichtung 15 vorgesehen ist. Das Kraftübertragungselement taucht mit dem betätigbaren Abschnitt 14a in die Aufnahmeöffnung 10a ein, damit die Verriegelungseinrichtung 15 die Verriegelung mit dem stationären Formträger 10 vornehmen kann.

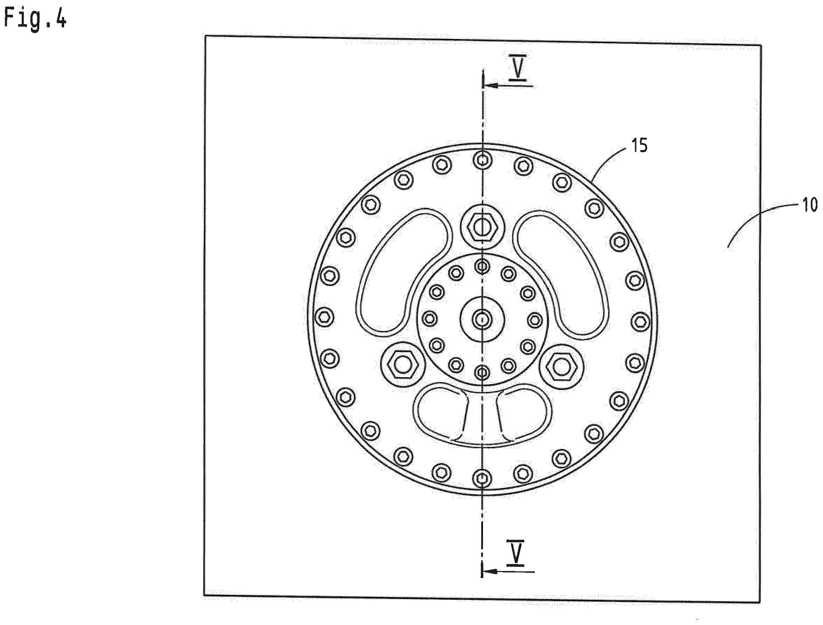

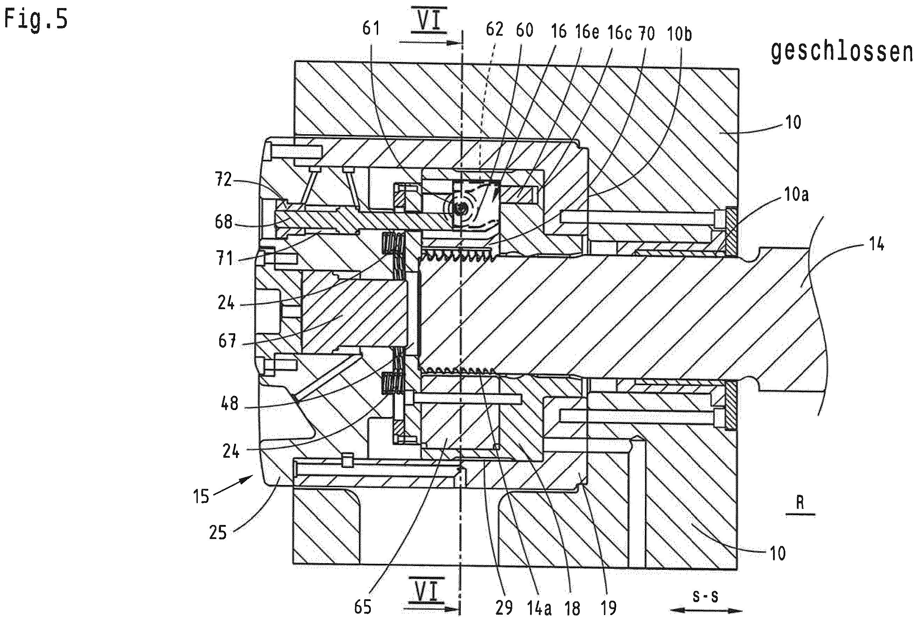

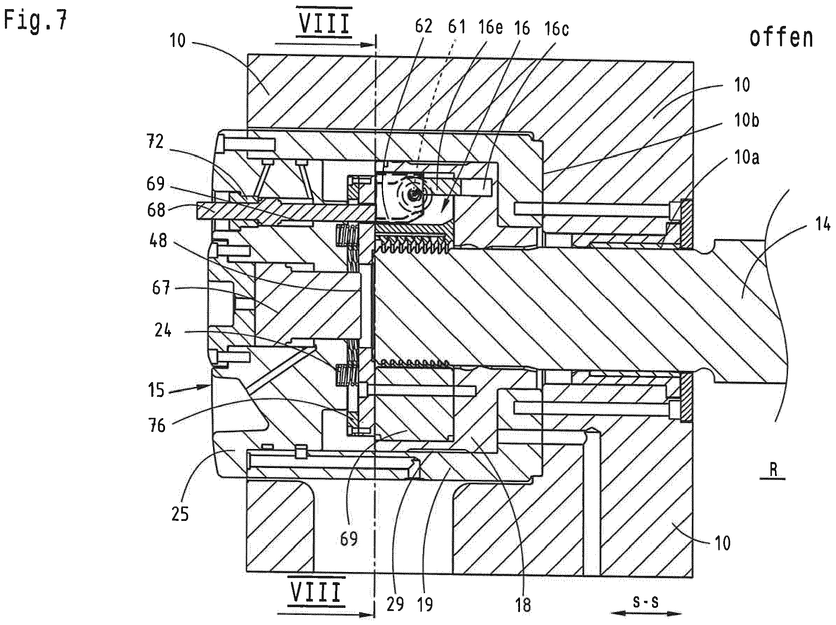

Im Folgenden wird der Aufbau der Verriegelungseinrichtung 15 anhand der Figuren 4 bis 9 an einem ersten Ausführungsbeispiel näher erläutert. Figur 4 zeigt eine Ansicht der Verriegelungseinrichtung 15, wie sie von der vom Formspannraum R abgewandten Seite des Formträgers 10 aus zu sehen ist. Im Schnitt der Fig. 5 nach Linie V-V von Fig. 4 ergibt sich für den geschlossenen, also verriegelten Zustand der Verriegelungseinrichtung ein Eingriff von Verriegelungselementen 70, die vorzugsweise als Spannbacken ausgebildet sind, in die betätigbaren Abschnitte 14a des als Holm 14 ausgebildeten Kraftübertragungselements. Im Ausführungsbeispiel sind je Verriegelungseinrichtung 15 drei Verriegelungselemente vorgesehen, grundsätzlich ist jedoch auch eine andere Anzahl von wenigstens zwei und damit mehreren Verriegelungselementen möglich. Der betätigbare Abschnitt 14a als auch das Verriegelungselement 70 weisen gemäß dem Ausführungsbeispiel jeweils eine Verzahnung auf, die formschlüssig ineinander steuerbar sind, um dadurch die formschlüssige Verriegelung zu bewirken. Die Verriegelungseinrichtung 15 weist wenigstens einen in Schließrichtung s-s beweglichen Aktor 16 auf, durch dessen Bewegung die Verriegelungselemente 70 quer zur Schließrichtung s-s entlang einer Zwangsführung in Form einer Kulissenführung 60 beim Formschluss in und außer formschlüssige Wirkverbindung mit dem betätigbaren Abschnitt 14a überführbar sind. Gemäß Fig. 5 und 7 ist der Aktor 16 zugleich mit wenigstens einem Kolben 18 der Kolben-Zylinder-Einheit 17 zum Aufbringen der Schließkraft verbunden.

Der im Folgenden noch erläuterte Bewegungsablauf ist so, dass die lineare Bewegung des Aktors 16 in Schließrichtung s-s in die quer zur Schließrichtung s-s und radial zur Längserstreckung des Kraftübertragungselements erfolgende Bewegung der Verriegelungselemente 70 überführbar ist.

Dies wird deutlich durch einen Vergleich der Figuren 5 und 7:

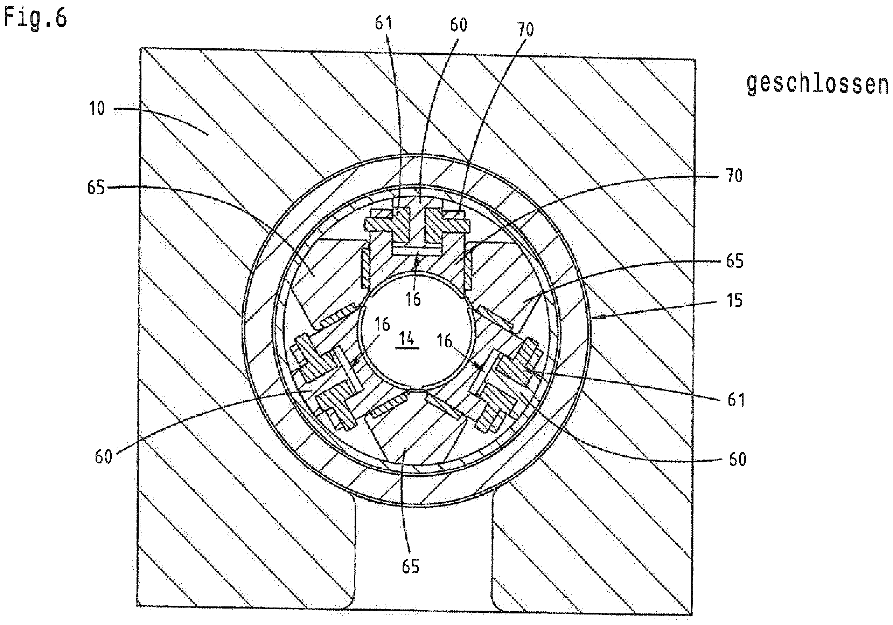

Fig. 5 zeigt die verriegelte Stellung, in der die Verriegelungselemente 70 mit ihrer Verzahnung in die Verzahnung des betätigbaren Abschnitts 14a eingreifen. Grundsätzlich sind statt einer Verzahnung auch andere vorzugsweise formschlüssige Verbindungen denkbar, wie z.B. Ringnuten. Die Verriegelungselemente sind an Rollen 61 angekoppelt, wie dies z.B. in Fig. 6, einem Schnitt nach Linie VI-VI von Fig. 5 zu erkennen ist. Die Rollen 61 bewegen sich in einer Kulissenführung 60 und werden im geschlossenen Zustand durch die Position des Verriegelungskolbens 68 in ihrer Stellung gehalten. Im geschlossenen Zustand befindet sich der Verriegelungskolben 68 infolge einer Druckbeaufschlagung des Zylinderraums 71 in Fig. 5 am in der Figur rechten Anschlag des Zylinderraums 69. Der Verriegelungskolben 68 beaufschlagt die Kammer, was zu einer hydraulischen Sicherung führt. Zusätzlich wird die Rolle 61 in der Rollenbahn 62 auf einer Ebene positioniert, die quer, vorzugsweise im rechten Winkel zur Verriegelungsrichtung angeordnet ist, so dass ohne äußere Kraft keine Verschiebung der Rolle 61 erfolgt. Dies führt zu einer mechanischen Sicherung, die in beiden Endlagen (Verrieglung geschlossen bzw. geöffnet) vorgesehen ist.

Um nun die Verriegelungselemente 70 aus der Verriegelungsposition in eine offene, unverriegelte Stellung gemäß Fig. 7 zu überführen, wird der Verriegelungskolben 68 in Fig. 7 durch Beaufschlagung des Zylinderraums 69 mit Druck in die gegenüberliegende Stellung überführt, in der der Verriegelungskolben zur Anlage am Zylinderdeckel 72 gelangt. Bei dieser Bewegung wird der Aktor 16 linear in Schließrichtung s-s bewegt und bewegt dabei die Rollen 61 in der Kulissenführung 60. Vorzugsweise ist zumindest eine Rollbahn 62 für Rollen 61 vorgesehen. Entlang der Kulissenführung 60 werden die Rollen 61 und damit die Verriegelungselemente 70 über die Rollbahn 62 radial nach außen und innen bewegt. Die vorzugsweise am Verriegelungselement 70 angebrachte Rolle 61 erfüllt den Zweck eine gleitende Bewegung in eine verschleißreduzierte Rollbewegung umzuwandeln.

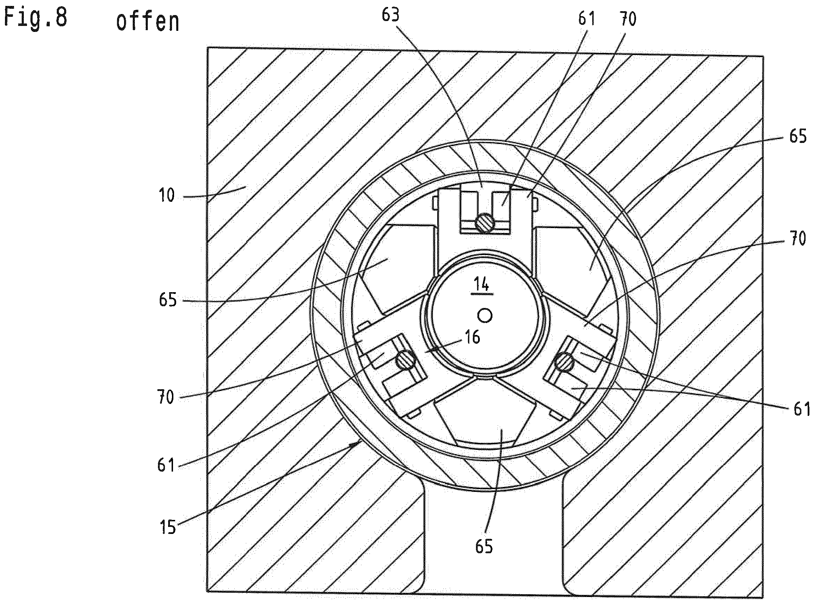

Erkennbar ist in Fig. 7 im Vergleich zu Fig. 5 die Rolle 61 radial von der Mittellinie des Kraftübertragungselements weiter nach außen gerückt. Bei dieser Bewegung haben die Rollen 61 aufgrund der in Fig. 6 und 8 erkennbaren Ankopplung der Rollen 61 an den Verriegelungselementen 70 das Verriegelungselement ebenfalls radial nach außen mitgenommen, so dass die Verzahnung des Verriegelungselementes 70 außer Eingriff mit dem betätigbaren Abschnitt 14a gelangt ist. Bei der Bewegung der Verriegelungselemente 70 sind diese an den in Fig. 6 und 8 dargestellten Backenführungen 65 für eine im Wesentlichen radiale Bewegung geführt. Die Backenführung 65 ist mit dem Kolben 18 verbunden und macht die Hochdruckbewegung des Kolbens 18 mit, hat aber mit der eigentlichen Verriegelungsbewegung nichts zu tun. Durch das Zusammenspiel von Verriegelungskolben 68, Aktor 16, Rolle 61, Verriegelungselement 70 und Kulissenführung 60 ergibt sich eine präzise Zustellung bzw. Bewegung außer Eingriff der Verzahnungen von Verriegelungselement und betätigbarem Abschnitt 14a.

Die Zwangsführung ist gemäß Fig. 5 bis 8 als Kulissenführung 60 für die an Rollen 61 gelagerten Verriegelungselemente 70 vorgesehen. Die Verriegelungselemente sind als mit dem betätigbarem Abschnitt 14a in Wirkverbindung überführbare Spannbacken ausgebildet. Durch die gegenüber dem Aktor 16 beweglichen Verriegelungselemente 70 bilden sich Aktorelemente 16e mit Ausnehmungen 16c aus, die das Kraftübertragungselement, also den Holm 14, im mit dem Formträger verriegelten Zustand übergreifen. Vorzugsweise wird dabei außenseitig am Aktor 16 im Bereich seiner Aktorelemente 16e die Kulissenführung 60 für die Verriegelungselemente 70 bzw. eine Rollbahn 62 für Rollen 61 der Verriegelungselemente gebildet. Die Verriegelungselemente 70 selbst befinden sich vorzugsweise in sich in Schließrichtung s-s erstreckenden Ausnehmungen des Aktors 16. Vorzugsweise führt die Zwangsführung die Verriegelungselemente 70 an Rollen 61 in einem Bewegungskanal 63 beidseitig, was eine erhöhte Präzision sichert und damit einerseits den Verschleiß der Verriegelungseinrichtung verringert. Gleichzeitig ergibt sich ein kompaktes festes Gefüge, das die Übertragung selbst hoher Schließkräfte zuverlässig ermöglicht.

Im Ausführungsbeispiel ist am Kolben 18 die Ausnehmung 16c als eine Lagerbohrung eingebracht. Am Aktor 16 ist im rechten Bereich ein Bolzen als Aktorelement 16e angebracht, welcher in der Lagerbohrung geführt wird. Somit ist der Aktor 16 im rechten Bereich durch den Verriegelungskolben 68 und auf der linken Seite durch das Aktorelement 16e geführt. Mit der beidseitigen Führung wird verhindert, dass sich der Aktor 16 unter der Kraft der radialen Verschiebung der Verriegelungselemente 70 verformt. Damit wird eine präzise Führung des Aktors 16 und in Folge eine gleichgängige Radialbewegung der Verriegelungselemente 70 gewährleistet.

Beim Einführen des Kraftübertragungselements in die Aufnahmeöffnung 10a ist die Verriegelungseinrichtung gemäß den Fig. 5 und 7 so ausgestaltet, dass selbst bei einer unsachgemäßen Eingabe das Kraftübertragungselement nicht ungedämpft am Grund der Aufnahmeöffnung 10a "aufschlägt". Um dort eine Dämpfung zu gewährleisten, sind verschiedene elastische Mittel in Form von Federn vorgesehen, wie z.B. die elastischen Mittel 24, das den Verriegelungskolben 68 abfedert.

Ist die Verriegelung gemäß Fig. 5, 6 erfolgt, kann die Schließkraft über den Kolben 18 aufgebracht werden, der in der Verriegelungseinrichtung 15 im Zylinder 19 aufgenommen ist. Die gesamte Einheit, die insofern auch die Kolben-Zylinder-Einheit zur Aufbringung der Schließkraft darstellt, ist auf der vom Formspannraum abgewandten Seite über einen Zylinderdeckel 25 verschlossen. In Fig. 5 ist erkennbar, dass der Zylinderdeckel 25 unmittelbar am Zylinder 19 befestigt ist und die gesamte Verriegelungseinrichtung 15 ihrerseits über Befestigungsmittel am Grund 10b der die Verriegelungseinrichtung aufnehmenden Öffnung im stationären Formträger befestigt ist.

Ein Kolben 67 übernimmt in den Fig. 5-8 die klassische Funktion "Hochdruck öffnen", wenn die Spritzgießform M sich z.B. infolge eines Verklebens der Formhälften nicht ohne weiteres öffnet. Die Bewegung der Kulissenführung 60 und somit auch die radiale Bewegung der Verriegelungselemente 70 wird in den Fig. 5-8 mit den zusätzlichen - im Ausführungsbeispiel drei - Kolben 68 realisiert.

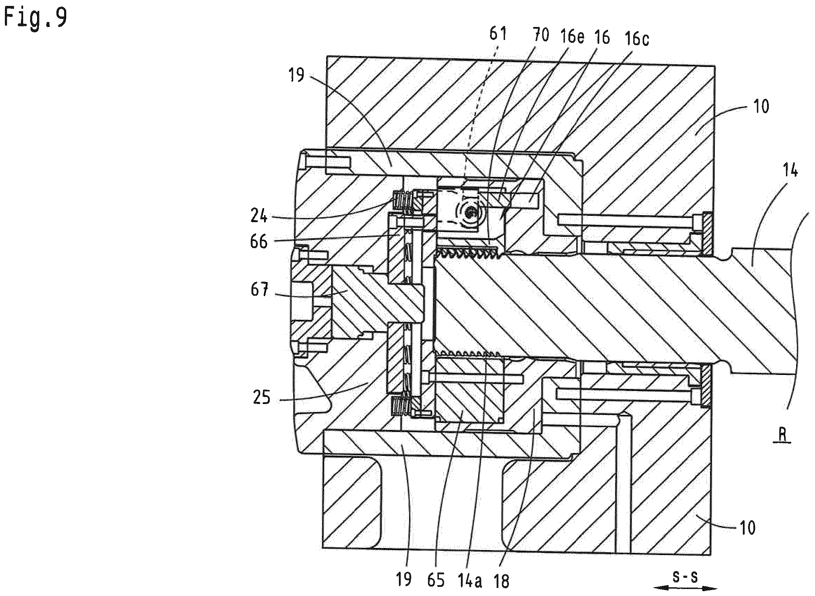

In Fig. 9 wird mit einer Verbindungsplatte 66 die Möglichkeit geschaffen, mit dem Kolben 67 zum Hochdruck-Öffnen ebenfalls die Bewegung der Verriegelungselemente 70 zu erzeugen. Erst wenn die Kulissenführungen 60 mit dem Kolben 67 nach rechts bewegt wurde (und die Verriegelungselemente entriegelt sind), kommt der Kolben 67 am Holm 14 zur Anlage und kann diesen entsprechend mit einer größeren Kraft nach rechts hinaus schieben.

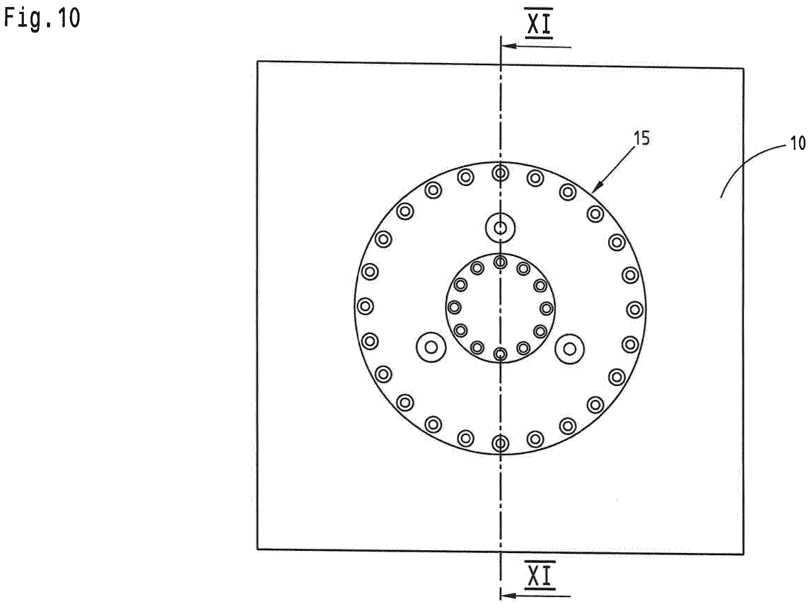

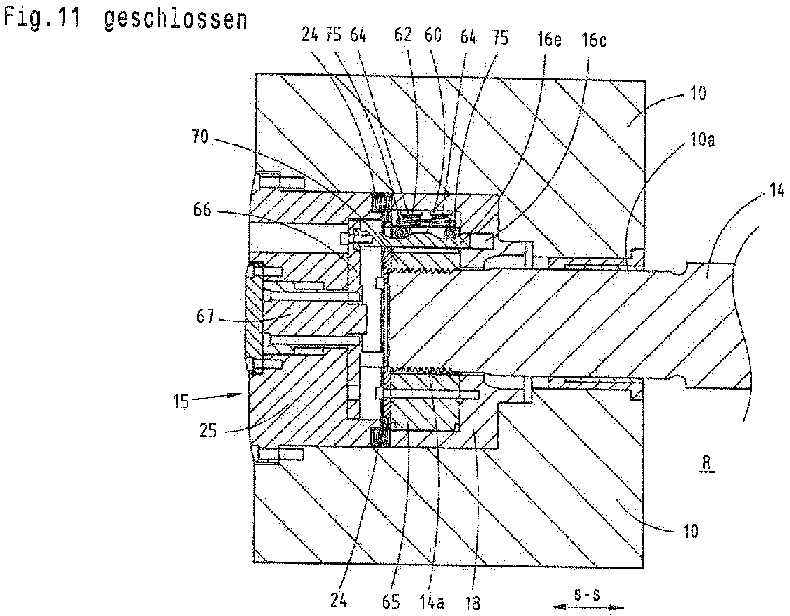

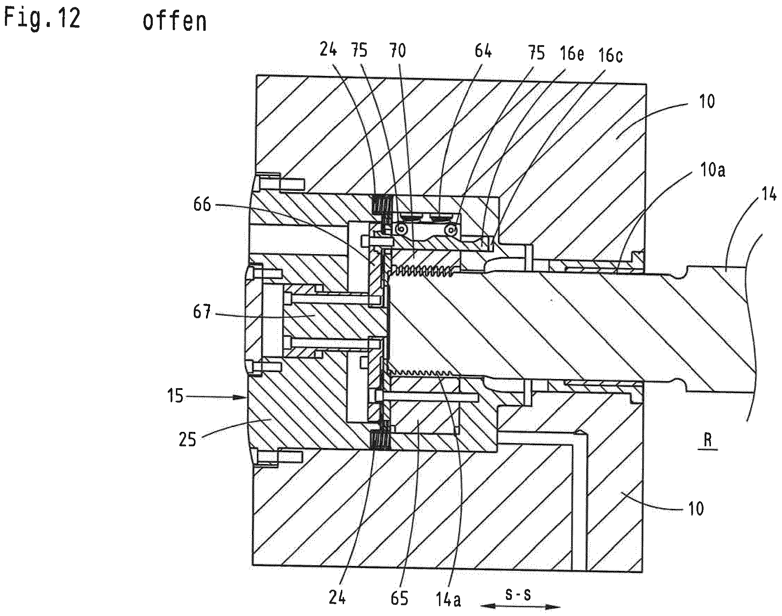

Das Ausführungsbeispiel der Fig. 10 bis 12 zeigt eine alternative Gestaltung der Verriegelungselemente 70 und insbesondere eine alternative Führung. Hier sind die Verriegelungselemente 70 an Doppelrollen 75 geführt, die je für sich eine eigene Kulissenführung haben. Ein Vergleich der Fig. 11 und 12, d.h. zwischen der geschlossenen, verriegelten Stellung gemäß Fig. 11 und der offenen, unverriegelten Stellung gemäß Fig. 12 zeigt, dass an einem mittigen Kolben 67 die Verbindungsplatte 66 gelagert ist, die ihrerseits die Aktorelemente 16e führt. An den Aktorelementen 16e sind für jede Doppelrolle 75 entsprechende Rollbahnen 62 gebildet, so dass sich bei Betätigung des Kolbens 67 die Doppelrollen 75 gemeinsam radial nach außen bewegen. Da die Kulissenführungen identisch ausgebildet sind, ergibt sich damit eine Parallelverschiebung der Verriegelungselemente 70, so dass diese exakt parallel zur Schließrichtung s-s in und außer Wirkverbindung mit dem betätigbaren Abschnitt 14a überführbar sind bzw. zustellbar sind.

Die Bewegung in die geöffnete Stellung erfolgt vorzugsweise so, dass die Verriegelungselemente 70 gegen die Kraft elastischer Mittel 64 in ihre entriegelte Stellung überführt werden. Dies bedeutet, dass die Verriegelungselemente stets darauf drängen, wieder in die verriegelte Stellung überführt zu werden, so dass sich eine passive Sicherheit ergibt, d.h. beim Ausfall der Energieversorgung verriegelt die Verriegelungseinrichtung selbsttätig und überführt das Verriegelungselement 70 in Wirkeingriff mit dem betätigbaren Abschnitt 14a des Kraftübertragungselements.

Sämtlichen Ausführungsbeispielen ist gemeinsam, dass der Aktor 16 und der Kolben 18 Teile einer in sich geschlossenen Baugruppe sind, d.h. die Verriegelungseinrichtung 15 ist eine Baugruppe, die beim Hersteller vorgefertigt oder selbst an entfernten Orten der Welt leicht vorgehalten werden kann, um sie bedarfsweise schnell an der Spritzgießmaschine auszutauschen.

Im verriegelten Zustand der Verriegelungseinrichtung 15 kann ergänzend bedarfsweise mittels des Kolbens 18 ein Hochdruck zur Erzeugung der Schließkraft aufgebracht werden. Vorzugsweise ist der Kolben 18 zum Aufbringen der Schließkraft gegen die Kraft elastischer Elemente 24 betätigbar. Ist ein zusätzliches Öffnen mit Hochdruck erforderlich, weil sich z.B. die Spritzgießform verklebt hat, kann dazu ergänzend der Kolben 67 eingesetzt werden.

Verfahrensgemäß arbeitet die Spritzgießmaschine so, dass das wenigstens ein Kraftübertragungselement, das im Ausführungsbeispiel durch mehrere Holme 14 gebildet ist, beispielsweise aber auch durch um den Formspannraum R herum geführte U-förmige Elemente gebildet sein kann, mit einem der Formträger 11, 10, im Ausführungsbeispiel mit dem beweglichen Formträger 11, verbunden ist. An seinem von diesem Formträger beabstandeten Ende ist ein dem anderen der Formträger 10, 11, im Ausführungsbeispiel dem stationären Formträger 10 zugeordneter, für einen Wirkeingriff betätigbarer Abschnitt 14a vorgesehen. Der betätigbare Abschnitt 14a wird beim Formschluss der Teile der Spritzgießform M an dem anderen Formträger formschlüssig mittels mehrerer radial zum Kraftübertragungselement angeordneter Verriegelungselemente 70 wenigstens einer Verriegelungseinrichtung 15 verriegelt. Im so verriegelten Zustand wird eine über das Kraftübertragungselement wirkende Schließkraft mittels einer Kolben-Zylinder-Einheit 17 aufgebracht.

Die Verriegelungselemente 70 sind an wenigstens einem in Schließrichtung s-s beweglichen Aktor 16 quer zur Schließrichtung entlang einer als Kulissenführung 60 ausgebildeten Zwangsführung beim Formschluss in und außer formschlüssiger Wirkverbindung mit dem betätigbaren Abschnitt 14a überführbar. Der Aktor 16 ist innerhalb der Verriegelungseinrichtung 15 zugleich mit einem Kolben 18 der Kolben-Zylinder-Einheit 17 verbunden, der die Schließkraft aufbringt. Gemäß den Fig. 5 bis 8 bzw. 11, 12 wird die lineare Bewegung des Aktors 16 in Schließrichtung s-s in eine quer zur Schließrichtung s-s und radial zur Längserstreckung des Kraftübertragungselements erfolgende Bewegung der Verriegelungselemente 70 überführt. Dadurch wird einerseits der Aktor 16 nicht verformt, andererseits kann eine präzise Zustellung der Verriegelungselemente 70 erfolgen, so dass die Verzahnung der Verriegelungselemente 70 oder auch eine andere geometrische Ausgestaltung in die entsprechend gegengleiche Verzahnung bzw. Ausgestaltung des betätigbaren Abschnitts 14a des Kraftübertragungselements eingeführt oder daraus wieder entfernt werden kann.

Die an Rollen 61 gelagerten Verriegelungselemente 70 werden bei der Bewegung des Aktors 16 in Schließrichtung s-s in der Kulissenführung 60 am Aktor geführt. Vorzugsweise erfolgt die Bewegung der Verriegelungselemente über Rollen 61, die in einem Bewegungskanal 63 der Zwangsführung beidseitig geführt werden. Dies gestattet einen kompakten Aufbau, aber auch eine exakte Führung, was dazu beiträgt, den Verschleiß der Verriegelungselemente 70 zu verringern als auch entsprechend hohe Kräfte zuverlässig übertragen zu können.

Vorzugsweise werden die Verriegelungselemente 70 gegen die Kraft elastischer Mittel 64 in ihre entriegelte Stellung überführt, wie dies in den Figuren 11 und 12 dargestellt ist. Dadurch ergibt sich ein selbsttätiges Rückstellen in die verriegelte Stellung und damit eine passive Sicherheit bei Ausfall der Energieversorgung.

In einer bevorzugten Ausführungsform sind die Verriegelungselemente 70 gemäß dem Ausführungsbeispiel der Fig. 10 bis 12 an Doppelrollen 75 parallel zur Schließrichtung s-s in und außer Wirkverbindung mit dem betätigbaren Abschnitt 14a überführbar. Dies bedeutet, dass eine Parallelverschiebung der Verriegelungselemente in und außer Wirkverbindung erfolgt, so dass eine präzise Zustellung in die verriegelte Stellung mit den bereits oben angeführten Vorteilen möglich ist.

Im verriegelten Zustand wird mittels des Kolbens 18 ein Druck zur Erzeugung der Schließkraft erzeugt. Auch der Kolben 18 kann bevorzugterweise zum Aufbringen der Schließkraft gegen die Kraft elastischer Elemente 24 betätigt werden.

Der am Formträger in Schließrichtung s-s axial beweglich gelagerte Aktor 16 weist eine Aufnahmeöffnung auf, in die der vom Aktor 16 betätigbare Abschnitt in Schließrichtung eingeführt wird.

Insgesamt ergibt sich eine präzise als auch kompakte Verriegelungseinrichtung, die selbst hohe Kräfte zuverlässig und auch langfristig übertragen kann. Gepaart mit der beweglichen Lagerung der Verriegelungselemente 70 am Aktor 16 ergibt sich eine gute Führung durch den Aktor, gleichzeitig aber auch eine präzise Überführung der Verriegelungselemente in und außer Wirkeingriff mit dem betätigbaren Abschnitt 14a der Kraftübertragungselemente.

### Bezugszeichenliste

| | | | |
|---|---|---|---|
| 10 | stationärer Formträger | 40 | Mutter |
| 10a | Aufnahmeöffnung | 41 | Motor |
| 10b | Grund | 42 | Formhöhenverstellung |
| 11 | beweglicher Formträger | 60 | Kulissenführung |
| 11a | Tischschlitten | 61 | Rolle |
| 13 | Formfahreinrichtung | 62 | Rollbahn |
| 14 | Holm | 63 | Bewegungskanal |
| 14a | betätigbarer Abschnitt | 64 | elastische Mittel |
| 14b | Gewindeabschnitt | 65 | Backenführung |
| 15 | Verriegelungseinrichtung | 66 | Verbindungsplatte |
| 16 | Aktor | 67 | Kolben |
| 16c | Ausnehmung | 68 | Verriegelungskolben |
| 16e | Aktorelement | 69, 71 | Zylinderraum |
| 17 | Kolben-Zylinder-Einheit | 70 | Verriegelungselement |
| 18 | Kolben | 72 | elastische Mittel |
| 19 | Zylinder | 75 | Doppelrolle |
| 21 | Maschinenständer | B | Befestigungsmittel |
| 24 | elastisches Element | M | Spritzgießform |
| 25 | Zylinderdeckel | R | Vorspannraum |
| 29, 30 | Zylinderraum | s-s | Schließrichtung |

## Patentansprüche

1. Formschließeinheit für eine Spritzgießmaschine zur Verarbeitung von Kunststoffen und anderer plastifizierbarer Massen mit
- einem stationären Formträger (10),
- einem relativ zum stationären Formträger (10) beweglichen Formträger (11,), der zwischen sich und dem stationären Formträger (10) einen Formspannraum (R) zur Aufnahme von Spritzgießformen (M) bildet und entlang einer Schließrichtung (s-s) zum Schließen und Öffnen der Spritzgießform (M) beweglich ist,
- einer Formfahreinrichtung (13) zum Überführen des beweglichen Formträgers (11) in und außer Formschluss der zwischen den Formträgern (10, 11) aufgenommenen Teile einer Spritzgießform (M),
- wenigstens einem Kraftübertragungselement, das mit einem der Formträger (11, 10) verbunden und an seinem von dem einen der Formträger (11, 10) beabstandeten Ende einen dem anderen der Formträger (10, 11) zugeordneten für einen Wirkeingriff betätigbaren Abschnitt (14a) aufweist,
- wenigstens einer dem anderen Formträger (10, 11) zugeordneten Verriegelungseinrichtung (15) mit mehreren radial zum Kraftübertragungselement angeordneten Verrieglungselementen, die bei dem Formschluss der Teile der Spritzgießform (M) zum Aufbringen einer Schließkraft mit dem betätigbaren Abschnitt (14a) in formschlüssige Wirkverbindung überführbar sind,
- wobei die Verriegelungseinrichtung (15) wenigstens einen in Schließrichtung (s-s) beweglichen Aktor (16) aufweist, an dem bei Bewegung des Aktors die Verriegelungselemente (70) quer zur Schließrichtung (s-s) entlang einer Zwangsführung beim Formschluss in und außer formschlüssige Wirkverbindung mit dem betätigbaren Abschnitt (14a) überführbar sind, und
- wobei der Aktor zugleich mit wenigstens einem Kolben (18) einer Kolben-Zylinder-Einheit (17) zum Aufbringen der Schließkraft verbunden ist,
**dadurch gekennzeichnet, dass** die Zwangsführung eine Kulissenführung (60) für die Verriegelungselemente (70) ist, die als mit dem betätigbaren Abschnitt (14a) in Wirkverbindung überführbare Spannbacken ausgebildet sind.

2. Formschließeinheit nach Anspruch 1, **dadurch gekennzeichnet, dass** die lineare Bewegung des Aktors in Schließrichtung (s-s) in die quer zur Schließrichtung (s-s) und radial zur Längserstreckung des Kraftüberführungselements erfolgende Bewegung der Verriegelungselemente (70) überführbar ist.

3. Formschließeinheit nach Anspruch 1 oder 2, **dadurch gekennzeichnet, dass** die Verriegelungselemente (70) in der Kulissenführung (60) an Rollen (61) gelagert sind.

4. Formschließeinheit nach einem der vorhergehenden Ansprüche, **dadurch gekennzeichnet, dass** die das Kraftübertragungselement im mit dem Formträger verriegelten Zustand übergreifenden Aktorelemente (16e) außenseitig die Kulissenführung (60) für die Verriegelungselemente (70) bilden.

5. Formschließeinheit nach Anspruch 4, **dadurch gekennzeichnet, dass** die Aktorelemente (16e) eine Rollbahn (62) für die Rollen (61) der Verriegelungselemente (70) bilden.

6. Formschließeinheit nach einem der vorhergehenden Ansprüche, **dadurch gekennzeichnet, dass** die Zwangsführung die Verriegelungselemente (70) an Rollen (61) in einem Bewegungskanal (63) beidseitig führt.

7. Formschließeinheit nach einem der vorhergehenden Ansprüche, **dadurch gekennzeichnet, dass** die Verriegelungselemente (70) gegen die Kraft elastischer Mittel (64) in ihre entriegelte Stellung überführbar sind und/oder an Doppelrollen (75) geführt parallel zur Schließrichtung (s-s) in und außer Wirkverbindung mit dem betätigbaren Abschnitt (14a) überführbar sind.

8. Formschließeinheit nach einem der vorhergehenden Ansprüche, **dadurch gekennzeichnet, dass** der Aktor (16) zur Verrieglung des wenigstens einen Kraftübertragungselements mit dem Formträger und der Kolben (18) zum Aufbringen der Schließkraft Teile einer in sich geschlossenen Baugruppe sind.

9. Formschließeinheit nach einem der vorhergehenden Ansprüche, **dadurch gekennzeichnet, dass** im verriegelten Zustand mittels des Kolbens (18) ein Hochdruck zur Erzeugung der Schließkraft erzeugbar ist und/oder dass der Kolben (18) zum Aufbringen der Schließkraft gegen die Kraft elastischer Elemente (24) betätigbar ist.

10. Verfahren zum Verriegeln eines Kraftübertragungselements an einem Formträger einer Spritzgießmaschine zur Verarbeitung von Kunststoffen und anderer plastifizierbarer Massen, wobei die Spritzgießmaschine aufweist
- einen stationären Formträger (10),
- einen relativ zum stationären Formträger (10) beweglichen Formträger (11), der zwischen sich und dem stationären Formträger (10) einen Formspannraum (R) zur Aufnahme von Spritzgießformen (M) bildet und entlang einer Schließrichtung (s-s) zum Schließen und Öffnen der Spritzgießform (M) beweglich ist,
- eine Formfahreinrichtung (13) zum Überführen des beweglichen Formträgers (11) in und außer Formschluss der zwischen den Formträgern (10, 11) aufgenommenen Teile einer Spritzgießform (M),
- das wenigstens eine Kraftübertragungselement, das mit einem der Formträger (11, 10) verbunden und an seinem von dem einen der Formträger (11, 10) beabstandeten Ende einen dem anderen der Formträger (10, 11) zugeordneten für einen Wirkeingriff betätigbaren Abschnitt (14a) aufweist,
wobei der betätigbare Abschnitt (14a) beim Formschluss der Teile der Spritzgießform (M) an dem anderen Formträger (10, 11) formschlüssig mittels mehrerer radial zum Kraftübertragungselement angeordneten Verrieglungselemente (70) wenigstens einer Verriegelungseinrichtung (15) verriegelt wird und im so verriegelten Zustand eine über das Kraftübertragungselement wirkende Schließkraft aufgebracht wird,
wobei die Verriegelungselemente (70) an wenigstens einem in Schließrichtung (s-s) beweglichen Aktor (16) quer zur Schließrichtung (s-s) entlang einer Zwangsführung beim Formschluss in und außer formschlüssige Wirkverbindung mit dem betätigbaren Abschnitt (14a) überführbar sind, und
wobei der Aktor (16) innerhalb der Verriegelungseinrichtung (15) zugleich mit einem Kolben (18) einer Kolben-Zylinder-Einheit (17) verbunden ist, der die Schließkraft aufbringt,
**dadurch gekennzeichnet, dass** die Verriegelungselemente (70) bei der Bewegung des Aktors (16) in Schließrichtung (s-s) in einer als Zwangsführung ausgebildeten Kulissenführung (60) geführt werden, die als Spannbacken mit dem betätigbaren Abschnitt (14a) in Wirkverbindung überführbar sind.

11. Verfahren nach Anspruch 10, **dadurch gekennzeichnet, dass** die lineare Bewegung des Aktors (16) in Schließrichtung (s-s) in eine quer zur Schließrichtung (s-s) und radial zur Längserstreckung des Kraftüberführungselements erfolgende Bewegung der Verriegelungselemente (70) überführt wird.

12. Verfahren nach Anspruch 10 oder 11, **dadurch gekennzeichnet, dass** die an Rollen (61) gelagerten Verriegelungselemente (70) bei der Bewegung des Aktors (16) in Schließrichtung (s-s) in der Kulissenführung (60) am Aktor geführt werden und/oder dass die Verriegelungselemente (70) an Rollen (61) in einem Bewegungskanal (63) der Zwangsführung beidseitig geführt werden.

13. Verfahren nach einem der Ansprüche 10 bis 12, **dadurch gekennzeichnet, dass** die Verriegelungselemente (70) gegen die Kraft elastischer Mittel (64) in ihre entriegelte Stellung überführt werden und/oder an Doppelrollen (75) parallel zur Schließrichtung (s-s) in und außer Wirkverbindung mit dem betätigbaren Abschnitt (14a) überführt werden.

14. Verfahren nach einem der Ansprüche 10 bis 13, **dadurch gekennzeichnet, dass** im verriegelten Zustand mittels des Kolbens (18) ein Hochdruck zur Erzeugung der Schließkraft erzeugt wird und/oder dass der Kolben (18) zum Aufbringen der Schließkraft gegen die Kraft elastischer Elemente (24) betätigt wird.

15. Verfahren nach einem der Ansprüche 10 bis 14, **dadurch gekennzeichnet, dass** der Aktor (16), der das wenigstens eine Kraftübertragungselement mit dem Formträger verriegelt, und der Kolben (18) zum Aufbringen der Schließkraft beide in einer in sich geschlossenen Baugruppe angeordnet werden.

## Claims

1. A mold closing unit for an injection molding machine for processing plastics and other plasticizable materials, comprising
- a stationary mold carrier (10),
- a mold carrier (11) that is movable relative to the stationary mold carrier (10) and forms, between itself and the stationary mold carrier (10), a mold clamping space (R) for receiving injection molds (M) and is movable in a closing direction (s-s) for the purpose of closing and opening the injection mold (M),
- a mold drive device (13) for bringing the movable mold carrier (11) into and out of mold closure of parts of an injection mold (M) which are received between the mold carriers (10, 11),
- at least one force transmission element, which is connected to one of the mold carriers (11, 10) and has at its end spaced from the one of the mold carriers (11, 10) a portion (14a) that is associated with the other of the mold carriers (10, 11) and is actuable for the purpose of operative engagement,
- at least one locking device (15) that is associated with the other mold carrier (10, 11) and has a plurality of locking elements that are arranged radially in relation to the force transmission element and which, during mold closure of the parts of the injection mold (M), are configured to be brought into positively locking operative connection with the actuable portion (14a) for the purpose of applying a closing force,
- wherein the locking device (15) comprises at least one actuator (16) that is movable in the closing direction (s-s) and on which, during movement of the actuator, the locking elements (70) are configured to be brought into and out of positively locking operative connection with the actuable portion (14a), transversely to the closing direction (s-s) in a forced guidance arrangement during mold closure, and
- wherein at the same time the actuator is connected to at least one piston (18) of a piston-and-cylinder unit (17), for the purpose of applying the closing force,
**characterized in that** the forced guidance arrangement is a cam guide (60) for the locking elements (70), which take the form of clamping jaws that are configured to be brought into operative connection with the actuable portion (14a).

2. The mold closing unit as claimed in claim 1, **characterized in that** the linear movement of the actuator in the closing direction (s-s) is configured to be converted into the movement of the locking elements (70) transverse to the closing direction (s-s) and radially in relation to the longitudinal extent of the force transmission element.

3. The mold closing unit as claimed in claim 1 or 2, **characterized in that** the locking elements (70) are mounted in the cam guide (60) on rollers (61).

4. The mold closing unit as claimed in one of the preceding claims, **characterized in that** the actuator elements (16e) that span the force transmission element in the condition in which it is locked to the mold carrier form, on the outside, the cam guide (60) for the locking elements (70).

5. The mold closing unit as claimed in claim 4, **characterized in that** the actuator elements (16e) form a roller track (62) for the rollers (61) of the locking elements (70).

6. The mold closing unit as claimed in one of the preceding claims, **characterized in that** the forced guidance arrangement guides the locking elements (70) on both sides on rollers (61) in a movement channel (63).

7. The mold closing unit as claimed in one of the preceding claims, **characterized in that** the locking elements (70) are configured to be brought into their unlocked position in opposition to the force of resilient devices (64) and/or are configured to be brought into and out of operative connection with the actuable portion (14a) in a manner guided on double rollers (75), parallel to the closing direction (s-s).

8. The mold closing unit as claimed in one of the preceding claims, **characterized in that** the actuator (16) for locking the at least one force transmission element to the mold carrier, and the piston (18) for applying the closing force are parts of an independent assembly.

9. The mold closing unit as claimed in one of the preceding claims, **characterized in that** in the locked condition a high pressure for generating the closing force is configured to be generated by means of the piston (18) and/or **in that** the piston (18) for applying the closing force is actuable in opposition to the force of resilient elements (24).

10. A method for locking a force transmission element to a mold carrier of an injection molding machine for processing plastics and other plasticizable materials, wherein the injection molding machine comprises
- a stationary mold carrier (10),
- a mold carrier (11) that is movable relative to the stationary mold carrier (10) and forms, between itself and the stationary mold carrier (10), a mold clamping space (R) for receiving injection molds (M) and is movable in a closing direction (s-s) for the purpose of closing and opening the injection mold (M),
- a mold drive device (13) for bringing the movable mold carrier (11) into and out of mold closure of parts of an injection mold (M) which are received between the mold carriers (10, 11),
- the at least one force transmission element, which is connected to one of the mold carriers (11, 10) and has at its end spaced from the one of the mold carriers (11, 10) a portion (14a) that is associated with the other of the mold carriers (10, 11) and is actuable for the purpose of operative engagement,
wherein, during mold closure of the parts of the injection mold (M), the actuable portion (14a) is locked with positive engagement to the other mold carrier (10, 11) by means of a plurality of locking elements (70) of at least one locking device (15) which are arranged radially in relation to the force transmission element, and in the condition locked in this way a closing force that acts by way of the force transmission element is applied,
wherein, at the location of at least one actuator (16) that is movable in the closing direction (s-s), the locking elements (70) are configured to be brought into and out of positively locking operative connection with the actuable portion (14a) transversely to the closing direction (s-s) in a forced guidance arrangement during mold closure, and wherein, within the locking device (15), the actuator (16) is at the same time connected to a piston (18) of a piston-and-cylinder unit (17) that applies the closing force, **characterized in that**, when the actuator (16) is moved in the closing direction (s-s), the locking elements (70) are guided in a cam guide (60) that takes the form of a forced guidance arrangement, and these take the form of clamping jaws that are configured to be brought into operative connection with the actuable portion (14a).

11. The method as claimed in claim 10, **characterized in that** the linear movement of the actuator (16) in the closing direction (s-s) is converted into a movement of the locking elements (70) transverse to the closing direction (s-s) and radially in relation to the longitudinal extent of the force transmission element.

12. The method as claimed in claim 10 or 11, **characterized in that**, during movement of the actuator (16) in the closing direction (s-s), the locking elements (70) mounted on rollers (61) are guided in the cam guide (60) on the actuator and/or **in that** the locking elements (70) are guided on rollers (61) on both sides in a movement channel (63) of the forced guidance arrangement.

13. The method as claimed in one of claims 10 to 12, **characterized in that** the locking elements (70) are brought into their unlocked position in opposition to the force of resilient devices (64) and/or are brought into and out of operative connection with the actuable portion (14a) on double rollers (75), parallel to the closing direction (s-s).

14. The method as claimed in one of claims 10 to 13, **characterized in that** in the locked condition a high pressure is generated by means of the piston (18) for generating the closing force, and/or **in that** the piston (18) for applying the closing force is actuated in opposition to the force of resilient elements (24).

15. The method as claimed in one of claims 10 to 14, **characterized in that** the actuator (16), which locks the at least one force transmission element to the mold carrier, and the piston (18) for applying the closing force are both arranged in an independent assembly.

## Revendications

1. Unité de fermeture de moule pour une machine de moulage par injection pour la fabrication de matières plastiques et d'autres masses plastifiables, comportant
- un support de moule stationnaire (10),
- un support de moule (11) déplaçable relativement au support de moule stationnaire (10), qui forme un espace de détente de moule (R) entre lui et le support de moule stationnaire (10) pour le logement de moules à injection (M) et est déplaçable le long d'une direction de fermeture (s-s) pour la fermeture et l'ouverture du moule à injection (M),
- un dispositif de déplacement de moule (13) pour amener le support de moule déplaçable (11) dans et hors de la fermeture des parties d'un moule à injection (M) logées entre les supports de moule (10, 11),
- au moins un élément de transmission de force, qui est relié avec l'un des supports de moule (11, 10) et présente à son extrémité éloignée de l'un des supports de moule (11, 10) une section (14a) actionnable associée à l'autre des supports de moule (10, 11) pour un engagement fonctionnel,
- au moins un dispositif de verrouillage (15) associé à l'autre support de moule (10, 11) avec plusieurs éléments de verrouillage disposés radialement par rapport à l'élément de transmission de force et qui, lors de la fermeture des parties du moule à injection (M), peuvent être amenés en liaison fonctionnelle par complémentarité de forme avec la section actionnable (14a) pour appliquer une force de fermeture,
- le dispositif de verrouillage (15) présentant au moins un actionneur (16) déplaçable dans la direction de fermeture (s-s), dans lequel, lors du déplacement de l'actionneur, les éléments de verrouillage (70) peuvent être amenés, perpendiculairement à la direction de fermeture (s-s) le long d'un guidage forcé lors de la fermeture du moule, en et hors liaison fonctionnelle par complémentarité de forme avec la section actionnable (14a), et
- l'actionneur étant relié également avec au moins un piston (18) d'une unité de cylindre à piston (17) pour l'application de la force de fermeture,
**caractérisée en ce que** le guidage forcé est un guidage à coulisse (60) pour les éléments de verrouillage (70) qui sont réalisés sous forme de mâchoires de serrage pouvant être amenées en liaison fonctionnelle avec la section actionnable (14a).

2. Unité de fermeture de moule selon la revendication 1, **caractérisée en ce que** le déplacement linéaire de l'actionnaire dans la direction de fermeture (s-s) peut être transformé en le déplacement des éléments de verrouillage (70) s'effectuant perpendiculairement à la direction de fermeture (s-s) et radialement par rapport à l'extension longitudinale de l'élément de transmission de force.

3. Unité de fermeture de moule selon la revendication 1 ou 2, **caractérisée en ce que** les éléments de verrouillage (70) sont fixés dans guidage à coulisse (60) sur des rouleaux (61).

4. Unité de fermeture de moule selon l'une des revendications précédentes, **caractérisée en ce que** les éléments d'actionnement (16e) venant en prise avec l'élément de transmission de force à l'état verrouillé avec le support de moule, forment du côté extérieur le guidage à coulisse (60) pour les éléments de verrouillage (70).

5. Unité de fermeture de moule selon la revendication 4, **caractérisée en ce que** les éléments d'actionnement (16e) forment un chemin de roulement (62) pour les rouleaux (61) des éléments de verrouillage (70).

6. Unité de fermeture de moule selon l'une des revendications précédentes, **caractérisée en ce que** le guidage forcé conduit les éléments de verrouillage (70) des deux côtés sur des rouleaux (61) dans un canal de déplacement (63).

7. Unité de fermeture de moule selon l'une des revendications précédentes, **caractérisée en ce que** les éléments de verrouillage (70) peuvent être amenés dans leur position déverrouillée à l'encontre de la force de moyens élastiques (64) et/ou amenés, en étant conduits sur des doubles rouleaux (75), parallèlement à la direction de fermeture (s-s) en et hors liaison fonctionnelle avec la section actionnable (14a).

8. Unité de fermeture de moule selon l'une des revendications précédentes, **caractérisée en ce que** l'actionneur (16) pour le verrouillage du ou des éléments de transmission de force avec le support de moule et le piston (18) pour l'application de la force de fermeture sont des parties d'un ensemble fermé en soi.

9. Unité de fermeture de moule selon l'une des revendications précédentes, **caractérisé en ce qu'**à l'état verrouillé une pression élevée peut être produite à l'aide du piston (18) pour la production de la force de fermeture et/ou **en ce que** le piston (18) peut être actionné pour l'application de la force de fermeture à l'encontre de la force des éléments élastiques (24).

10. Procédé de verrouillage d'un élément de transmission de force sur un support de moule d'une machine de moulage par injection pour la fabrication de matières plastiques et d'autres masses plastifiables, dans lequel la machine de moulage par injection présente :
- un support de moule stationnaire (10),
- un support de moule (11) déplaçable relativement au support de moule stationnaire (10), qui forme un espace de détente de moule (R) entre lui et le support de moule stationnaire (10) pour le logement de moules à injection (M) et est déplaçable le long d'une direction de fermeture (s-s) pour la fermeture et l'ouverture du moule à injection (M),
- un dispositif de déplacement de moule (13) pour amener le support de moule déplaçable (11) dans et hors de la fermeture des parties d'un moule à injection (M) logées entre les supports de moule (10, 11),
- le ou les élément(s) de transmission de force, qui est relié avec l'un des supports de moule (11, 10) et présente à son extrémité éloignée de l'un des supports de moule (11, 10) une section (14a) actionnable associée à l'autre des supports de moule (10, 11) pour un engagement fonctionnel,
- la section actionnable (14a) étant verrouillée lors de la fermeture des parties du moule à injection (M) sur l'autre support de moule (10,11) par complémentarité de forme au moyen de plusieurs éléments de verrouillage (70) disposés radialement par rapport à l'élément de transmission de force et, à l'état ainsi verrouillé, une force de fermeture agissant par l'intermédiaire de l'élément de transmission de force est appliquée,
- les élément de verrouillage (70) pouvant être amenés dans au moins un actionneur (16) déplaçable dans la direction de fermeture (s-s) perpendiculairement à la direction de fermeture (s-s) le long d'un guidage forcé, lors de la fermeture du moule en et hors de liaison fonctionnelle avec la section actionnable (14a) et
- l'actionneur (16) étant relié à l'intérieur du dispositif de verrouillage (15) également avec un piston (18) d'une unité de cylindre à piston (17) qui applique la force de fermeture,
**caractérisé en ce que** les éléments de verrouillage (70) sont conduits, lors du déplacement de l'actionneur (16) dans la direction de fermeture (s-s) dans un guidage à coulisse (60) réalisé sous forme de guidage forcé et sont transformables en mâchoires de serrage en liaison fonctionnelle avec la section actionnable (14a).

11. Procédé selon la revendication 10, **caractérisé en ce que** le déplacement linéaire de l'actionneur (16) est amené dans la direction de fermeture (s-s) dans un déplacement des éléments de verrouillage (70) se produisant perpendiculairement à la direction de fermeture (s-s) et radialement par rapport à l'extension longitudinale de l'élément de transmission de force.

12. Procédé selon la revendication 10 ou 11, **caractérisé en ce que** les éléments de verrouillage fixés sur des rouleaux (61) sont conduits lors du déplacement de l'actionneur (16) dans la direction de fermeture (s-s) dans le guidage à coulisse (60) sur l'actionneur et/ou **en ce que** les éléments de verrouillage (70) sont conduits des deux côtés sur des rouleaux (61) dans un canal de déplacement (63) du guidage forcé.

13. Procédé selon l'une des revendications 10 à 12, **caractérisé en ce que** les éléments de verrouillage (70) sont amenés dans leur position déverrouillée à l'encontre de la force de moyens élastiques (64) et/ou sont amenés sur de doubles rouleaux (75) parallèlement à la direction de fermeture (s-s) dans et hors de la liaison fonctionnelle avec la section actionnable (14a).

14. Procédé selon l'une des revendications 10 à 13, **caractérisé en ce qu'**à l'état verrouillé, une pression élevée est produite à l'aide du piston (18) pour la production de la force de fermeture et/ou **en ce que** le piston (18) est actionné pour l'application de la force de fermeture à l'encontre de la force des éléments élastiques (24).

15. Procédé selon l'une des revendications 10 à 14, **caractérisé en ce que** l'actionneur (16), qui verrouille le ou les éléments de transmission de force avec le support de moule, et le piston (18) pour l'application de la force de fermeture sont tous les deux disposés dans un ensemble fermé en soi.
